# EUROPÄISCHE PATENTSCHRIFT

(11) **EP 2 803 528 B1**
(45) Veröffentlichungstag und Bekanntmachung des Hinweises auf die Patenterteilung: **02.06.2021**
(21) Anmeldenummer: 14165845.0
(22) Anmeldetag: 24.04.2014
(51) Int. Cl.: B60Q 1/068

(54) **Fahrzeugscheinwerfer**
Vehicle headlamp
Phare de véhicule

(30) Priorität: 16.05.2013 AT 503292013
(43) Veröffentlichungstag der Anmeldung: 19.11.2014
(73) Patentinhaber: ZKW Group GmbH, 3250 Wieselburg (AT)
(72) Erfinder: Leonhartsberger, Rudolf, 3393 Zelking (AT); Fink, Gabriel, 4381 St. Nikola (AT); Schragl, Martin, 3261 Zarnsdorf (AT)
(74) Vertreter: Patentanwaltskanzlei Matschnig & Forsthuber OG

(56) Entgegenhaltungen:
- EP-A1- 2 163 427
- DE-A1-102004 020 493
- FR-A3- 2 837 153
- JP-A- H03 138 801
- US-A1- 2013 051 059

## Beschreibung

Die Erfindung betrifft einen Fahrzeugscheinwerfer mit einem Gehäuse sowie mit zumindest zwei optisch relevanten Baueinheiten, beispielsweise zumindest zwei Lichtmodulen und/oder Lichtmodul-Einheiten, wobei jede der zumindest zwei optisch relevanten Baueinheiten um eine Horizontalachse und um eine Vertikalachse verschwenkbar sind, siehe zum Beispiel JP H03 138801 A oder FR 2 837 153 A3.

In einem Fahrzeugscheinwerfer ist es notwendig bzw. gesetzlich vorgeschrieben, dass das von dem Scheinwerfer erzeugte Lichtbündel in vertikaler und/oder horizontaler Richtung eingestellt werden kann (Grundeinstellung). Wenn der Fahrzeugscheinwerfer ein oder mehrere Lichtmodule oder Lichtmodul-Einheiten umfasst, so ist üblicherweise vorgesehen, dass diese Lichtmodule oder relevante Bauteile dieser Lichtmodule, welche auf eine Ausrichtung des ausgesendeten Lichtbündels Einfluss haben, z.B. eine Linse, ein Reflektor, etc. entsprechend eingestellt werden. Üblicherweise erfolgt die Einstellung der Lichtmodule, der Lichtmodul-Einheiten (eine Lichtmodul-Einheit besteht aus einem oder mehreren Lichtmodulen, die eine Baueinheit insofern bilden, als sie gemeinsam verstellt werden, indem sie beispielsweise starr auf einem gemeinsamen Träger sitzen oder anderweitig fix miteinander verbunden sind) bzw. ihrer Bauteile (im Folgenden ist nur noch von einem Einstellen der Lichtmodule die Rede, es ist aber klar, dass damit auch lediglich Bestandteile der Lichtmodule gemeint sein können) durch Verschwenken um Achsen, typischerweise um horizontale und/oder vertikale Achsen.

Umfasst der Fahrzeugscheinwerfer zwei oder mehr Lichtmodule, so ist es in der Regel günstig, wenn diese Lichtmodule auf einem gemeinsamen Tragrahmen sitzen, welcher gemeinsame Tragrahmen mit entsprechenden Einstelleinrichtungen um eine horizontale und/oder um eine vertikale Achse verschwenkt werden kann. Auf diese Weise können mit einer einzigen Einstelleinrichtung zwei oder mehr Lichtmodule in einer Richtung eingestellt werden, bzw. mit zwei Einstelleinrichtungen können alle Lichtmodule in vertikaler und horizontaler Richtung eingestellt werden.

Modernes Kfz-Design verlangt allerdings häufig eine große "Pfeilung" der Lichtmodule in einem Fahrzeugscheinwerfer. "Pfeilung" bedeutet dabei, dass - in der Regel der oder die außen liegenden Lichtmodule eines Scheinwerfers gegenüber den innenliegenden Lichtmodulen entgegen der Fahrtrichtung nach hinten versetzt sind. Der Winkel zwischen einer Vertikalebene, welche durch zwei Lichtmodule eines Scheinwerfers verläuft, und einer Vertikalebene normal auf die Fahrtrichtung wird als Pfeilungswinkel bezeichnet. Bei aktuellen Fahrzeugen liegt der Pfeilungswinkel teilweise bereits bei 45°.

Mit zunehmendem Pfeilungswinkel wird es schwieriger bzw. teilweise unmöglich, zwei oder mehr Lichtmodule (z.B. ein Lichtmodul für Abblendlicht und ein Lichtmodul für Fernlicht) auf einem gemeinsamen Tragrahmen anzuordnen, da es auf Grund der Pfeilung und des großen Abstandes zum Drehpunkt zu großen Auslenkungen der Lichtmodule kommen würde.

Entsprechend ist es im Stand der Technik notwendig, jedes Lichtmodul (bzw. jede Lichtmodul-Einheit) für sich separat einstellbar zu gestalten, beispielsweise indem jedes Lichtmodul auf einem eigenen Tragrahmen angeordnet ist, welcher um eine horizontale und/oder eine vertikale Achse verschwenkbar ist. Entsprechend wird auch für jedes Lichtmodul und für jede Verschwenkachse eine eigene Einstelleinrichtung benötigt.

Es ist eine Aufgabe der Erfindung, einen Fahrzeugscheinwerfer zu schaffen, bei welchem es möglich ist, zwei oder mehr optisch relevante Baueinheiten, wie etwa Lichtmodule oder Lichtmodul-Einheiten, gemeinsam mit lediglich einer Einstelleinrichtung pro Verstellrichtung einzustellen.

Diese Aufgabe wird mit einem eingangs erwähnten Fahrzeugscheinwerfer dadurch gelöst, dass erfindungsgemäß zumindest zwei der optisch relevanten Baueinheit jeweils in einem Tragelement angeordnet sind, welche Tragelemente in dem Gehäuse um jeweils eine Horizontalachse und um jeweils eine Vertikalachse verschwenkbar gelagert sind, und wobei zum Verschwenken der Tragelemente um deren Horizontalachsen eine Horizontalachsen-Verschwenkeinrichtung vorgesehen ist, welche Horizontalachsen-Verschwenkeinrichtung ein Tragelement um dessen Horizontalachse verschwenkt, und wobei die zumindest zwei Tragelemente mit einer Horizontalachsen-Koppelvorrichtung derart gekoppelt sind, dass bei einem Verschwenken des einen Tragelementes mit der Horizontalachsen-Verschwenkeinrichtung auch das zumindest eine weitere Tragelement um seine Horizontalachse verschwenkt wird, und wobei zum Verschwenken der beiden Tragelemente um deren zumindest eine Vertikalachse eine Vertikalachsen-Verschwenkeinrichtung vorgesehen ist, welche Vertikalachsen-Verschwenkeinrichtung ein Tragelement um dessen Vertikalachse verschwenkt, und wobei die zumindest zwei Tragelemente mit einer Vertikalachsen-Koppelvorrichtung derart gekoppelt sind, dass bei einem Verschwenken des einen Tragelementes mit der Vertikalachsen-Verschwenkeinrichtung auch das zumindest eine weitere Tragelement um seine Vertikalachse verschwenkt wird. Erfindungsgemäß ist somit pro Verschwenkachse lediglich eine Verschwenkeinrichtung vorgesehen, mit welcher ein Tragelement, auf welchem eine optisch relevante Baueinheit angeordnet ist, verschwenkt wird. Durch entsprechende Koppelung mit einem weiteren Tragelement für eine weitere optisch relevante Baueinheit wird auch dieses weitere Tragelement entsprechend mitverschwenkt und somit auch die weitere Baueinheit mit der entsprechenden Verschwenkeinrichtung mit eingestellt. Durch die Trennung in zwei separate Trageelemente und entsprechende Koppelung kann die Anordnung derart erfolgen, dass auch bei einer großen Pfeilung der optisch relevanten Baueinheiten deren Auslenkung bei einem Einstellen im gewünschten Ausmaß erfolgt und nicht eine zu große Auslenkung wie im Stand der Technik bei Verwendung eines gemeinsamen Tragrahmens erfolgt.

Zudem ist dabei vorgesehen, dass ein erstes Tragelement mit drei Lagerpunkten in dem Gehäuse gelagert ist, wobei ein erster und ein zweiter Lagerpunkt die Horizontalachse und der zweite und ein dritter Lagerpunkt die Vertikalachse bilden.

Es ist dabei vorgesehen, dass der zweite Lagerpunkt des ersten Tragelementes ein Fix-Lagerpunkt ist, welcher in Bezug auf das Gehäuse fix ist.

Erfindungsgemäß ist ein zweites Tragelement mit drei Lagerpunkten in dem Gehäuse gelagert, wobei ein erster und ein zweiter Lagerpunkt die Horizontalachse und der zweite und ein dritter Lagerpunkt die Vertikalachse bilden.

Es ist dabei vorgesehen, dass der zweite Lagerpunkt des zweiten Tragelementes ein Fix-Lagerpunkt ist, welcher in Bezug auf das Gehäuse fix ist

Erfindungsgemäß fallen die Horizontalachsen nicht zusammen, wobei insbesondere die Horizontalachsen in Lichtaustrittsrichtung zueinander versetzt sind, und die beiden Fix-Lagerpunkte der Tragrahmen sind in Lichtaustrittsrichtung hintereinander angeordnet, wobei vorzugsweise der erste Tragrahmen hinter dem zweiten Tragrahmen angeordnet ist.

Der Begriff "hinter" bedeutet dabei, dass der erste Tragrahmen im Bezug auf den zweiten Tragrahmen entgegen der Fahrtrichtung/Lichtaustrittsrichtung angeordnet ist.

Bei einer ersten konkreten Ausführungsform der Erfindung ist vorgesehen, dass die Horizontalachsen-Verschwenkeinrichtung, vorzugsweise direkt, an dem ersten Tragelement angreift.

Vorteilhafterweise ist dabei weiters vorgesehen, dass die Horizontalachsen-Verschwenkeinrichtung in dem dritten Lagerpunkt, vorzugsweise gelenkig, mit dem ersten Tragelement verbunden ist.

Außerdem ist vorgesehen, dass die Vertikalachsen-Verschwenkeinrichtung, vorzugsweise direkt, an dem ersten Tragelement angreift.

Mit Vorteil ist dabei vorgesehen, dass die Vertikalachsen-Verschwenkeinrichtung in dem ersten Lagerpunkt, vorzugsweise gelenkig, mit dem ersten Tragelement verbunden ist.

Bei dieser Ausführungsform werden die Tragrahmen mit einer entsprechenden Vertikalachsen-Verschwenkeinrichtung um ihre Vertikalachsen verschwenkt, wobei die Vertikalachsen-Verschwenkeinrichtung - vorzugsweise direkt - an einem der Tragrahmen angreift, während die Horizontalachsen-Verschwenkeineinrichtung, mit welcher die Tragrahmen um ihre Horizontalachsen verschwenkt werden, an dem anderen Tragrahmen - wiederum vorzugsweise direkt - angreift.

Vorzugsweise ist dabei weiters vorgesehen, dass die Horizontalachsen-Koppelvorrichtung im Bereich des dritten Lagerpunktes mit dem ersten Tragelement gelenkig verbunden ist.

Als günstig hat es sich dabei erwiesen, wenn die Horizontalachsen-Koppelvorrichtung in dem dritten Lagerpunkt des zweiten Tragelementes mit dem zweiten Tragelement gelenkig verbunden ist.

Weiters ist mit Vorteil vorgesehen, dass die Vertikalachsen-Koppelvorrichtung die beiden Tragrahmen direkt miteinander verbindet.

Zweckmäßig ist es dabei, wenn die Vertikalachsen-Koppelvorrichtung in dem ersten Lagerpunkt des zweiten Tragelementes mit dem zweiten Tragelement gelenkig verbunden ist.

Außerdem ist es von Vorteil, wenn die Horizontalachsen-Koppelvorrichtung die beiden Tragrahmen direkt miteinander verbindet.

Insbesondere ist dabei vorgesehen, dass die Vertikalachsen-Koppelvorrichtung mit dem ersten Tragelement in einem Gelenkspunkt, welcher auf der Horizontalachse zwischen dem ersten und dem zweiten Lagerpunkt des ersten Tragelementes liegt, vorzugsweise gelenkig, verbunden ist.

Auf diese Weise kann eine Verschwenkung der beiden Tragelemente in gleichem Ausmaß realisiert werden.

Beispielsweise ist dabei vorgesehen, dass der Gelenkspunkt in der Mitte zwischen dem ersten und dem zweiten Lagerpunkt an dem ersten Tragrahmen liegt.

Bei einer weiteren Ausführungsform der Erfindung ist vorgesehen, dass die Vertikalachsen-Koppelvorrichtung an dem oder in Bezug auf das Gehäuse um eine Koppelvorrichtungs-Vertikalachse verschwenkbar gelagert ist, wobei die Vertikalachsen-Koppelvorrichtung mittels der Vertikalachsen-Verstelleinrichtung, welche an der Vertikalachsen-Koppelvorrichtung, vorzugsweise gelenkig, angreift, um die Koppelvorrichtungs-Vertikalachse verschwenkbar ist, und wobei die Vertikalachsen-Koppelvorrichtung mit dem ersten Tragelement über dessen ersten Lagerpunkt und mit dem zweiten Tragelement über dessen ersten Lagerpunkt, vorzugsweise gelenkig, verbunden ist.

Bei einem Verschwenken der Vertikalachsen-Koppelvorrichtung um seine Achse werden entsprechend die beiden Tragelemente gleichzeitig um deren vertikale Achsen verschwenkt.

Insbesondere ist dabei vorgesehen, dass - insbesondere bei genau zwei Tragelementen - je ein Tragelement jeweils auf einer Seite einer in Lichtaustrittsrichtung und durch die Koppelvorrichtungs-Vertikalachse verlaufenden Vertikalebene angeordnet ist.

Durch diese Anordnung der Vertikalachse zwischen den Tragelementen, vorzugsweise in der geometrischen Mitte zwischen den Tragelementen, wodurch sich gleich lange Hebelarme und somit Verstellbewegungen im gleichen Ausmaß für beide Tragrahmen ergeben, wirkt im Falle einer Belastung, insbesondere einer Schockbelastung entgegen der Fahrtrichtung nur die resultierende Differenzkraft auf die Vertikalachsen-Verstelleinrichtung. Der größte Anteil der aus der Belastung auftretenden Gesamtkraft hingegen wird in den Drehpunkt eingeleitet.

Bei einer konkreten Ausführungsform ist vorgesehen, dass die ersten Lagerpunkte der Tragelemente von der Vertikalebene, welche durch die Koppelvorrichtungs-Vertikalachse verläuft, abgewandt, und die Fix-Lagerpunkte der Vertikalebene zugewandt sind. Außerdem ist mit Vorteil vorgesehen, dass die Horizontalachsen-Koppelvorrichtung mit dem ersten Tragelement über dessen dritten Lagerpunkt, vorzugsweise gelenkig, und mit dem zweiten Tragelement über dessen dritten Lagerpunkt, vorzugsweise gelenkig, verbunden ist, und wobei die Horizontalachsen-Verstelleinrichtung mit der Horizontalachsen-Koppelvorrichtung, vorzugsweise gelenkig, verbunden ist, sodass bei einem Verstellen der Horizontalachsen-Koppelvorrichtung mittels der Horizontalachsen-Verstelleinrichtung die zumindest zwei Tragelemente um ihre Horizontalachsen verschwenkt werden.

Bei einer konstruktiv einfachen, stabilen und kostengünstigen Ausführungsform ist vorgesehen, dass die Horizontalachsen-Koppelvorrichtung und/oder die Vertikalachsen-Koppelvorrichtung als, vorzugsweise einstückiges, Koppelelement ausgebildet sind.

Von Vorteil ist es allerdings, wenn die Horizontalachsen-Koppelvorrichtung und/oder die Vertikalachsen-Koppelvorrichtung längenveränderlich ausgebildet sind, wobei vorzugsweise die eingestellte Länge der Koppelvorrichtung fixierbar ist bzw. fix bleibt.

Durch Verändern der Länge einer Koppelvorrichtung können die Tragrahmen in vertikaler Richtung bzw. in horizontaler Richtung zueinander eingestellt werden.

Vorzugsweise sind beide Koppelvorrichtungen entsprechend ausgebildet.

"Fixierbar" bzw. "fix" bedeutet dabei, dass, nachdem die Länge der Koppelvorrichtung eingestellt wurde, vorzugsweise manuell, etwa unter Verwendung eines Werkzeuges, sich diese Länge ohne weiteren Eingriff des Benutzers nicht mehr ändert.

Unter "Länge" bzw. "Längserstreckung" ist die Erstreckung der Koppelvorrichtung zwischen den Verbindungspunkten an den Tragrahmen zu verstehen.

Bei einer konkreten Ausführungsform ist dabei vorgesehen, dass die Horizontalachsen-Koppelvorrichtung und/oder die Vertikalachsen-Koppelvorrichtung jeweils aus einem mit einem Außengewinde versehenen Schraubenelement und einem Koppelstangen-Element mit einem Innengewinde, in welchem das Schraubenelement verdrehbar gelagert ist, gebildet ist.

Weiters ist mit Vorteil vorgesehen, dass das Schraubenelement der zumindest einen Koppelvorrichtung gelenkig in einem Lagerpunkt mit dem zweiten Tragelement verbunden und das Koppelstangen-Element gelenkig in einem Lagerpunkt an dem ersten Tragrahmen gelagert ist.

Im Folgenden ist die Erfindung an Hand der Zeichnung näher erörtert. In dieser zeigt
Fig. 1 eine perspektivische Ansicht einer ersten Ausführungsform eines geöffneten, erfindungsgemäßen Fahrzeugscheinwerfers,
Fig. 1a einen Horizontalschnitt durch den Scheinwerfer nach Figur 1 im Bereich der Horizontalachsen- Koppelvorrichtung,
Fig. 2 eine perspektivische Ansicht des Verschwenkmechanismus des Fahrzeugscheinwerfers aus Figur 1 in einer Ansicht von schräg oben,
Fig. 3 eine perspektivische Ansicht des Verschwenkmechanismus des Fahrzeugscheinwerfers aus Figur 1 in einer Ansicht von schräg unten,
Fig. 4 eine perspektivische Ansicht einer zweiten Ausführungsform eines geöffneten, erfindungsgemäßen Fahrzeugscheinwerfers,
Fig. 5 eine perspektivische Ansicht des Verschwenkmechanismus des Fahrzeugscheinwerfers aus Figur 4 in einer Ansicht von schräg oben, und
Fig. 6 eine perspektivische Ansicht des Verschwenkmechanismus des Fahrzeugscheinwerfers aus Figur 4 in einer Ansicht von schräg hinten.

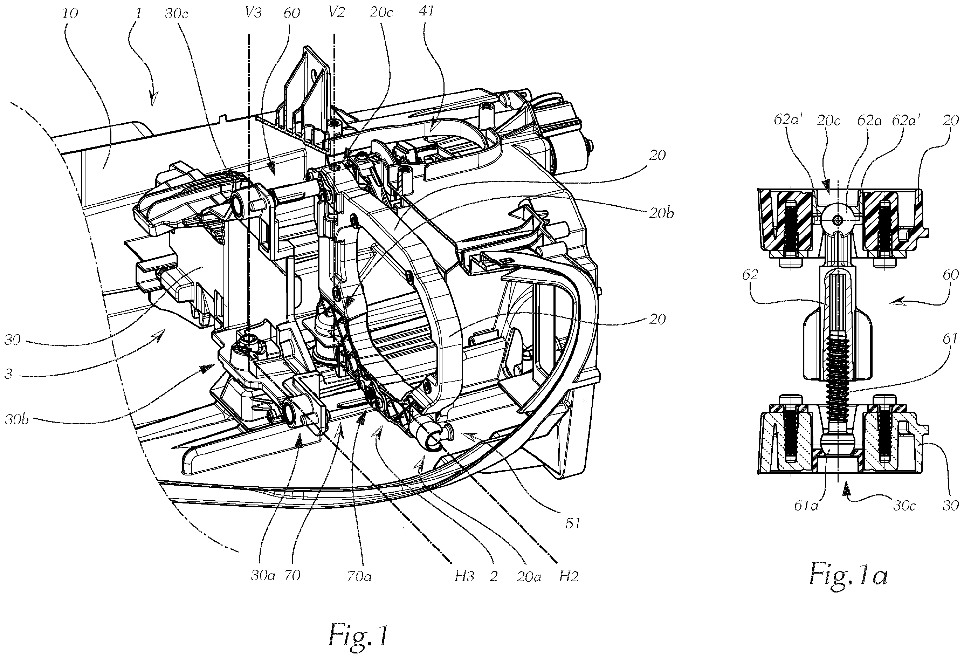

Die Figuren 1, 1a, 2 und 3 zeigen einen Ausschnitt aus einem Fahrzeugscheinwerfer 1, welcher ein Gehäuse 10 aufweist, und über zwei optisch relevanten Baueinheiten 2, 3 verfügt, welche in dem Gehäuse 10 angeordnet sind.

Bei einer optisch relevanten Baueinheit handelt es sich beispielsweise um ein Lichtmodul, um eine Lichtmodul-Einheit, welche aus einer oder mehreren Lichtmodulen besteht, oder um einen oder mehrere Bauteile eines solchen Lichtmoduls oder einer solchen Lichtmodul-Einheit, wobei dieser Bauteil oder diese Bauteile einen Einfluss auf die mit dem Lichtmodul oder die mit der Lichtmodul-Einheit erzeugte Lichtverteilung haben.

Mit einem Lichtmodul kann eine bestimmte Lichtverteilung, etwa eine Fernlichtverteilung, eine abgeblendete Lichtverteilung, wie etwa ein Abblendlicht, eine Nebellichtverteilung etc. erzeugt werden, oder ein Lichtmodul dient im Rahmen einer Lichtmodul-Einheit zur Erzeugung eines Teiles einer solchen Lichtverteilung.

Bei einem (optisch relevanten) Bauteil eines Lichtmoduls oder einer Lichtmodul-Einheit, welches Einfluss auf die mit dem Lichtmodul oder die mit der Lichtmodul-Einheit erzeugte Lichtverteilung hat, kann es sich beispielsweise um einen Reflektor, eine Linse, eine Blende, eine Lichtquelle bzw. eine Lichtquellen-Anordnung oder um andere Licht formende Mittel, wie Lichtleiter, Lichtleitkörper etc. handeln.

Die Position der optisch relevanten Baueinheiten, welche selbst in den Figuren, auch in Figur 1, nicht dargestellt sind, ist durch die Bezugszeichen 2 und 3 angedeutet. Die beiden optisch relevanten Baueinheiten 2, 3 sind jede um eine Horizontalachse H2, H3 und um eine Vertikalachse V2, V3 verschwenkbar.

Über diese Achsen können die Baueinheiten 2, 3 zur Einstellung ihrer Grundeinstellung verschwenkt werden. Es kann auch möglich sein, dass die Baueinheiten um diese Achsen weiters zur Leuchtweitenregelung und/oder zur Realisierung einer Kurvenlichtfunktion verschwenkt werden. Prinzipiell ist es aber auch möglich, dass die Kurvenlichtachsen an anderer Stelle liegen als die Vertikalachsen V2, V3.

Zur Verschwenkung ist jede der optisch relevanten Baueinheiten 2, 3 auf einem Tragelement 20, 30 angeordnet, wobei diese Tragelemente 20, 30 in dem Gehäuse 10 um jeweils eine Horizontalachse H2, H3 und um jeweils eine Vertikalachse V2, V3 verschwenkbar gelagert sind.

Bei dem Tragelement 20 für die erste Baueinheit 2 handelt es sich in dem gezeigten Beispiel um einen Tragrahmen, während es sich bei dem Tragelement 30 für die zweite Baueinheit 3 in diesem Beispiel um eine Tragplatte handelt.

Grundsätzlich kann natürlich auch vorgesehen sein, dass das Tragelement einstückig mit dem Lichtmodul oder einer Lichtmodul-Einheit ausgebildet ist.

Das erste Tragelement 20 ist mit drei Lagerpunkten 20a, 20b, 20c in dem Gehäuse 10 gelagert ist, wobei ein erster und ein zweiter Lagerpunkt 20a, 20b die Horizontalachse H2 und der zweite und ein dritter Lagerpunkt 20b, 20c die Vertikalachse V2 bilden.

Der zweite Lagerpunkt 20b des ersten Tragelementes 20 ist ein Fix-Lagerpunkt, welcher in Bezug auf das Gehäuse 10 fix ist.

Über den Fix-Lagerpunkt 20b, durch welchen die Horizontalachse H2 und die Vertikalachse V2 verlaufen und sich dort schneiden, ist das erste Tragelement 20 gelenkig mit dem Gehäuse 10 bzw. an einem in Bezug auf das Gehäuse feststehenden Bauteil gelenkig gelagert. Der Fix-Lagerpunkt 20b ist somit in Bezug auf das Gehäuse 10 nicht verschieblich, Verschwenkbewegungen des Tragelementes um diesen Fix-Lagerpunkt 20b sind aber möglich.

Außerdem ist das zweite Tragelement 30 mit drei Lagerpunkten 30a, 30b, 30c in dem Gehäuse 10 gelagert, wobei ein erster und ein zweiter Lagerpunkt 30a, 30b die Horizontalachse H3 und der zweite und ein dritter Lagerpunkt 30b, 30c die Vertikalachse V3 bilden.

Der zweite Lagerpunkt 30b des zweiten Tragelementes 30 ist ein Fix-Lagerpunkt ist, welcher in Bezug auf das Gehäuse 10 fix ist.

Über den Fix-Lagerpunkt 30b, durch welchen die Horizontalachse H3 und die Vertikalachse V3 verlaufen und sich dort schneiden, ist das zweite Tragelement 30 gelenkig mit dem Gehäuse 10 bzw. an einem in Bezug auf das Gehäuse feststehenden Bauteil gelenkig gelagert. Der Fix-Lagerpunkt 30b ist somit in Bezug auf das Gehäuse 10 nicht verschieblich, Verschwenkbewegungen des zweiten Tragelementes 30 um diesen Fix-Lagerpunkt 30b sind aber möglich.

Bei der gezeigten Ausführungsform ist weiters vorgesehen, dass die beiden Fix-Lagerpunkte 20b, 30b der Tragrahmen 20, 30 in Lichtaustrittsrichtung hintereinander angeordnet sind, wobei vorzugsweise der erste Tragrahmen 20 hinter dem zweiten Tragrahmen 30 angeordnet ist. Der Begriff "hinter" bedeutet dabei, dass der erste Tragrahmen im Bezug auf den zweiten Tragrahmen entgegen der Fahrtrichtung/Lichtaustrittsrichtung angeordnet ist.

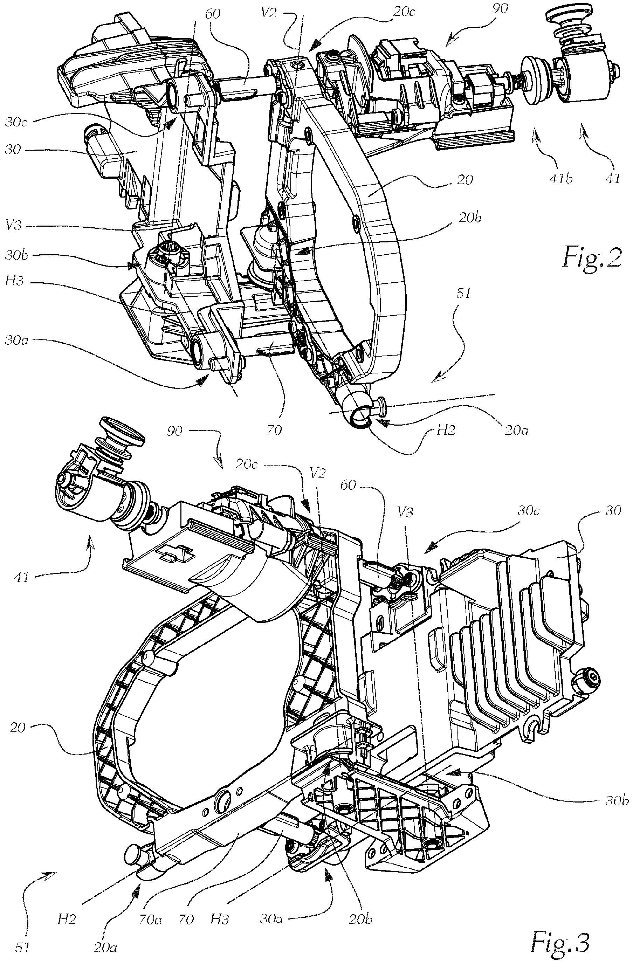

Zum gemeinsamen Verschwenken der Tragelemente 20, 30 um deren Horizontalachsen H2, H3 ist eine Horizontalachsen-Verschwenkeinrichtung 41 vorgesehen ist, welche insbesondere in den Figuren 2 und 3 besser zu erkennen ist. Mit dieser Horizontalachsen-Verschwenkeinrichtung 41 kann bei einer Betätigung das erste Tragelement 20 um seine Horizontalachse H2 verschwenkt werden.

Die Verstelleinrichtung 41 besteht in bekannter Weise beispielsweise aus einem manuell zu betätigenden Drehrad 41a, dessen Verdrehung in eine Linearbewegung eines Stellelementes 41b umgesetzt wird. Dieses Stellelement greift an dem ersten Tragelement 20 an und führt zu einer Verschwenkbewegung dieses Tragelementes um die Horizontalachse H2. In dem gezeigten Beispiel ist im Stellweg des Stellelementes 41b zusätzlich noch ein Antrieb 90, vorzugsweise ein elektrischer Antrieb zur Leuchtweitenregulierung angeordnet, welcher bei der Einstellung der Grundeinstellung mit verschoben wird und anschließend im Betrieb des Scheinwerfers die Leuchtweite der erzeugten Lichtverteilung(en) durch Schwenken um die horizontalen Achse, vorzugsweise dynamisch, reguliert.

Weiters sind die zwei Tragelemente 20, 30 mit einer Horizontalachsen-Koppelvorrichtung 60 derart gekoppelt sind, dass bei einem Verschwenken des ersten Tragelementes 20 mit der Horizontalachsen-Verschwenkeinrichtung 41 auch das zweite Tragelement 30 um seine Horizontalachse H3 verschwenkt wird.

Zum Verschwenken der beiden Tragelemente 20, 30 um deren Vertikalachsen V2, V3 ist eine Vertikalachsen-Verschwenkeinrichtung 51 vorgesehen, welche in den Figuren 1 - 3 allerdings nicht dargestellt ist und deren Position lediglich durch das Bezugszeichen 51 angedeutet ist. Üblicherweise handelt es sich dabei um eine Verschwenkeinrichtung 51, welche einen ähnlichen Aufbau aufweist wie die Verschwenkeinrichtung 41. Ein zusätzlicher Antrieb wie bei der Verschwenkeinrichtung 41 ist in dem gezeigten Beispiel für die Verschwenkeinrichtung 51 nicht unmittelbar vorgesehen, kann aber beispielsweise zur Realisierung einer, vorzugsweise dynamischen, Kurvenlichtfunktion ohne weiteres analog zu der Verschwenkeinrichtung 41 vorgesehen werden.

Mit der Vertikalachsen-Verschwenkeinrichtung 51 kann das Tragelement 20 um seine Vertikalachse V2 verschwenkt werden.

Weiters sind die beiden Tragelemente 20, 30 mit einer Vertikalachsen-Koppelvorrichtung 70 derart gekoppelt, dass bei einem Verschwenken des ersten Tragelementes 20 mit der Vertikalachsen-Verschwenkeinrichtung 51 auch das zweite Tragelement 30 um seine Horizontalachse V3 mit verschwenkt wird.

Insbesondere ist bei der ersten Variante der Erfindung, wie sie in den Figuren 1 - 3 dargestellt ist, vorgesehen, dass die Horizontalachsen-Verschwenkeinrichtung 41 - vorzugsweise direkt oder, wie gezeigt, über Zwischenschaltung eines LWR-Antriebes 90 - an dem ersten Tragelement 20 angreift, wozu die Horizontalachsen-Verschwenkeinrichtung 41 in dem ersten Lagerpunkt 20c gelenkig mit dem ersten Tragelement 20 verbunden ist.

Außerdem ist vorgesehen, dass die Vertikalachsen-Verschwenkeinrichtung 51, vorzugsweise direkt, ebenfalls an dem ersten Tragelement 20 angreift, wobei vorgesehen ist, dass die Vertikalachsen-Verschwenkeinrichtung 51 in dem ersten Lagerpunkt 20a mit dem ersten Tragelement 20 gelenkig verbunden ist.

Weiters ist vorgesehen, dass die Horizontalachsen-Koppelvorrichtung 60 im Bereich des dritten Lagerpunktes 20c mit dem ersten Tragelement 20 gelenkig verbunden ist. Dabei ist die Horizontalachsen-Koppelvorrichtung 60 in dem dritten Lagerpunkt 30c des zweiten Tragelementes 30 mit dem zweiten Tragelement 30 gelenkig verbunden.

Weiters verbindet die Vertikalachsen-Koppelvorrichtung 70 die beiden Tragrahmen 20, 30 direkt miteinander, wozu die Vertikalachsen-Koppelvorrichtung 70 in dem ersten Lagerpunkt 30a des zweiten Tragelementes 30 mit dem zweiten Tragelement 30 gelenkig verbunden ist. Die Vertikalachsen-Koppelvorrichtung 70 ist dabei mit dem ersten Tragelement 20 in einem Gelenkspunkt 70a, welcher auf der Horizontalachse H2 zwischen dem ersten und dem zweiten Lagerpunkt 20a, 20b des ersten Tragelementes 20a liegt, gelenkig verbunden. Auf diese Weise kann eine Verschwenkung der beiden Tragelemente in gleichem Ausmaß realisiert werden (damit die Tragelemente in gleichem Ausmaß verstellt werden, ist vorzugsweise vorgesehen, dass die Abstände 20a zu 20b und 30a zu 30b sowie 20b zu 20c und 30b zu 30c gleich sein). Beispielsweise ist dabei vorgesehen, dass der Gelenkspunkt 70a in der Mitte zwischen dem ersten und dem zweiten Lagerpunkt 20a, 20b an dem ersten Tragrahmen 20 liegt.

Alle gelenkigen Verbindungen sind dabei vorteilhafterweise als Kugelgelenke ausgebildet, sodass sich eine Verdrehung der beweglichen Teile um 2 Achsen realisieren lässt.

Bei der konstruktiv einfachen und kostengünstigen Ausführungsform kann vorgesehen sein, dass die Horizontalachsen- und die Vertikalachsen-Koppelvorrichtung 60, 70 jeweils als einzelnes Koppelelement, vorzugsweise als Koppelstange 60, 70 ausgebildet sind.

Bei der gezeigten Ausführungsform ist hingegen vorgesehen, dass - wie dies in Figur 1a in einem Horizontalschnitt gezeigt ist - die Horizontalachsen-Koppelvorrichtung 60 aus einem mit einem Außengewinde versehenen Schraubenelement 61 und einem Koppelstangen-Element 62 mit einem Innengewinde, in welchem das Schraubenelement 61 verdrehbar gelagert ist, gebildet ist.

Das Schraubenelement 61 ist gelenkig im Lagerpunkt 30c mit dem zweiten Tragelement 30 verbunden, das Koppelstangen-Element 62 ist gelenkig im Lagerpunkt 20c an dem ersten Tragrahmen 20 gelagert. In dem Kugelkopf 61a des Schraubenelementes 61 ist beispielsweise ein Innensechskant vorgesehen, über welchen sich das Schraubenelement 61 mit einem Werkzeug verdrehen lässt. Der Kugelkopf 62a des Koppelstangen-Elementes 62 ist mit Zapfen 62a' versehen, sodass das Koppelstangen-Element 62 gegen ein Verdrehen gesichert ist. Durch Verdrehen des Schraubenelementes 61 können die beiden Tragelemente 20, 30 um ihre Horizontalachsen H2, H3 zueinander ausgerichtet werden, d.h., beispielsweise bei festgehaltenem ersten Tragelement 20 kann das zweite Tragelement 30 durch (geringfügiges) Verschwenken um seine Horizontalachse H3 zu dem ersten Tragelement 20 ausgerichtet werden.

Es kann auch vorgesehen sein, dass die Vertikalachsen-Koppelvorrichtung 70 analog wie oben beschrieben zur Ausrichtung um die bzw. eine Vertikalachse ausgestaltet ist, wobei hier das Koppelstangen-Element im Lagerpunkt 70a verdreht wird, sodass eine Einstellung von der Rückseite her möglich ist.

Vorzugsweise sind beide Koppelvorrichtungen 60, 70 entsprechend ausgestaltet, sodass die Tragrahmen 20, 30 vor dem Einstellen der Grundeinstellung zueinander ausgerichtet werden können.

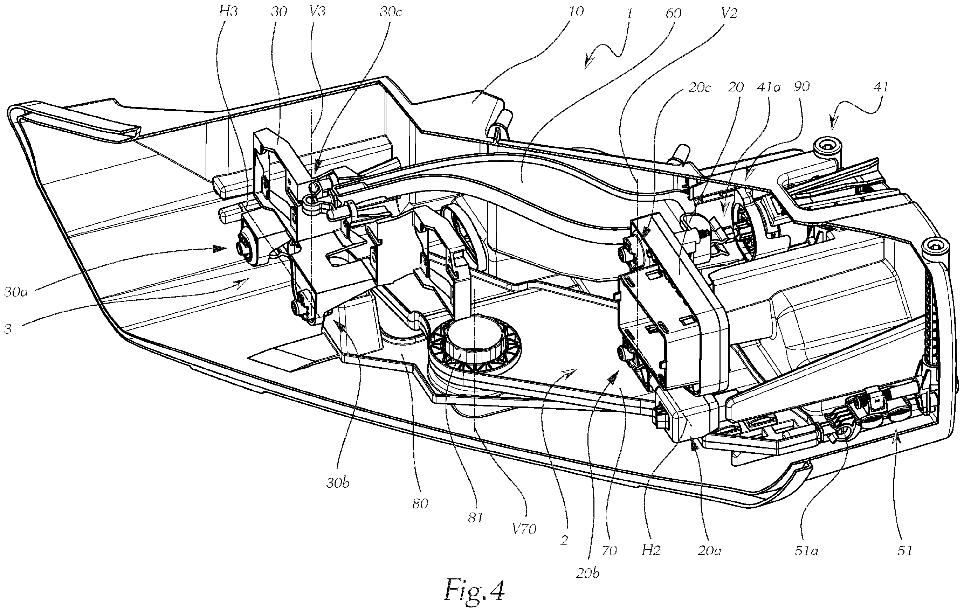

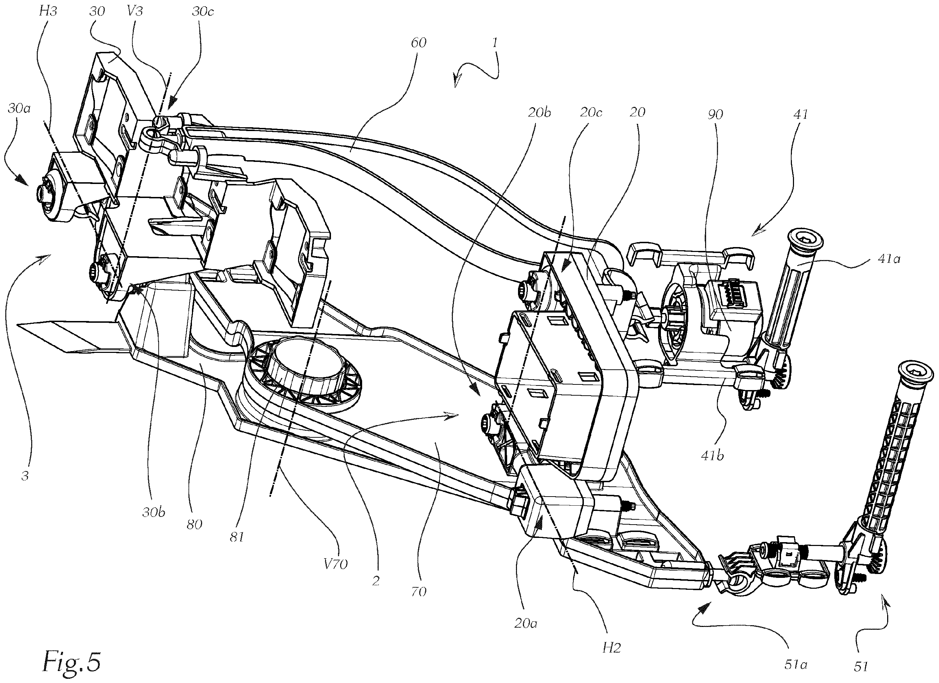

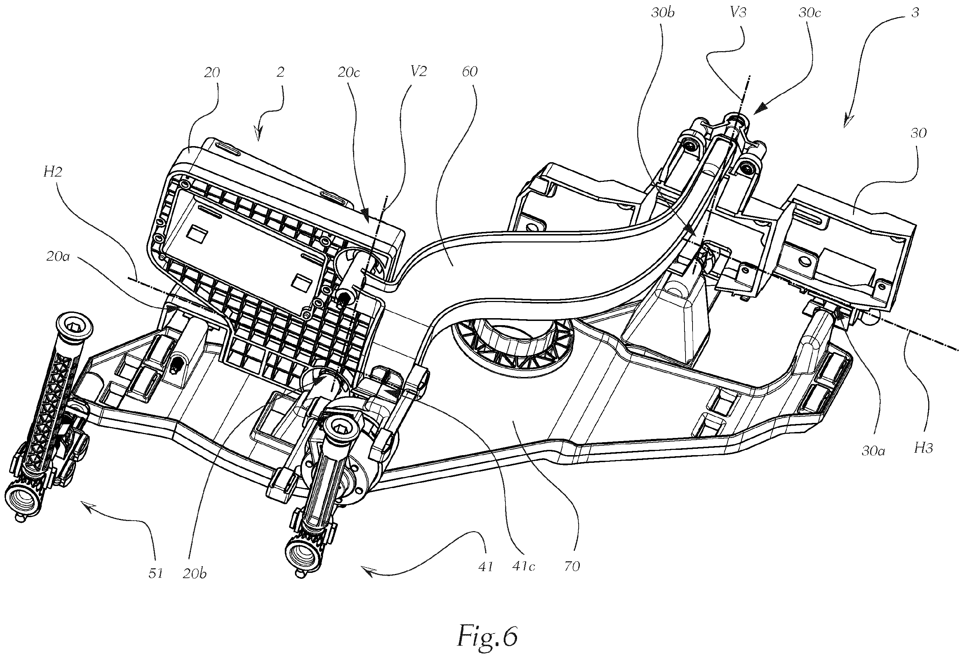

Die Figuren 4 - 6 beschreiben eine zweite Ausführungsform eines erfindungsgemäßen Fahrzeugscheinwerfers 1, wobei im Gegensatz zu Figur 1 in Figur 4 das Gehäuse 10 - wiewohl genauso vorhanden - nicht dargestellt ist.

Die grundsätzlichen Zusammenhänge sind auch bei dieser Ausführungsform dieselben wie bei der ersten Variante nach Figuren 1 - 3, im Folgenden sollen daher hauptsächlich die Unterschiede der zweiten zur ersten Variante dargestellt werden.

Die Figuren, insbesondere Figur 4 zeigen einen Ausschnitt aus einem Fahrzeugscheinwerfer 1, welcher ein Gehäuse 10 aufweist, und über zwei optisch relevanten Baueinheiten 2, 3 verfügt, welche in dem Gehäuse angeordnet sind.

Bei einer optisch relevanten Baueinheit handelt es sich wiederum beispielsweise um ein Lichtmodul, um eine Lichtmodul-Einheit, welche aus einer oder mehreren Lichtmodulen besteht, oder um einen oder mehrere Bauteile eines solchen Lichtmoduls oder einer solchen Lichtmodul-Einheit, wobei dieser Bauteil oder diese Bauteile einen Einfluss auf die mit dem Lichtmodul oder die mit der Lichtmodul-Einheit erzeugte Lichtverteilung haben.

Mit einem Lichtmodul kann eine bestimmte Lichtverteilung, etwa eine Fernlichtverteilung, eine abgeblendete Lichtverteilung, wie etwa ein Abblendlicht, eine Nebellichtverteilung etc. erzeugt werden, oder ein Lichtmodul dient im Rahmen einer Lichtmodul-Einheit zur Erzeugung eines Teiles einer solchen Lichtverteilung.

Bei einem (optisch relevanten) Bauteil eines Lichtmoduls oder einer Lichtmodul-Einheit, welches Einfluss auf die mit dem Lichtmodul oder die mit der Lichtmodul-Einheit erzeugte Lichtverteilung hat, kann es sich beispielsweise um einen Reflektor, eine Linse, eine Blende, eine Lichtquelle bzw. eine Lichtquellen-Anordnung oder um andere Licht formende Mittel, wie Lichtleiter, Lichtleitkörper etc. handeln.

Die Position der optisch relevanten Baueinheiten, welche selbst in den Figuren, auch in Figur 1, nicht dargestellt sind, ist durch die Bezugszeichen 2 und 3 angedeutet. Die beiden optisch relevanten Baueinheiten 2, 3 sind jede um eine Horizontalachse H2, H3 und um eine Vertikalachse V2, V3 verschwenkbar.

Über diese Achsen können die Baueinheiten 2, 3 zur Einstellung ihrer Grundeinstellung verschwenkt werden. Es kann auch möglich sein, dass die Baueinheiten um diese Achsen weiters zur Leuchtweitenregelung und/oder zur Realisierung einer Kurvenlichtfunktion verschwenkt werden.

Zur Verschwenkung ist jede der optisch relevanten Baueinheiten 2, 3 auf einem Tragelement 20, 30 angeordnet, wobei diese Tragelemente 20, 30 in dem Gehäuse um jeweils eine Horizontalachse H2, H3 und um jeweils eine Vertikalachse V2, V3 verschwenkbar gelagert sind.

Bei den Tragelementen 20 für die erste Baueinheit 2 und bei dem Tragelement 30 für die zweite Baueinheit 3 handelt es sich in dem gezeigten Beispiel um jeweils einen Tragrahmen.

Grundsätzlich kann natürlich auch vorgesehen sein, dass das Tragelement einstückig mit dem Lichtmodul oder einer Lichtmodul-Einheit ausgebildet ist.

Das erste Tragelement 20 ist mit drei Lagerpunkten 20a, 20b, 20c in dem Gehäuse gelagert ist, wobei ein erster und ein zweiter Lagerpunkt 20a, 20b die Horizontalachse H2 und der zweite und ein dritter Lagerpunkt 20b, 20c die Vertikalachse V2 bilden.

Der zweite Lagerpunkt 20b des ersten Tragelementes 20 ist ein Fix-Lagerpunkt, welcher in Bezug auf das Gehäuse fix ist.

In dem gezeigten Beispiel ist dabei eine Platte 80 vorgesehen, welche in Bezug auf das Gehäuse fix oder Teil des Gehäuses ist. Auf dieser Platte 80 ist der Fix-Lagerpunkt 20b angeordnet.

Über den Fix-Lagerpunkt 20b, durch welchen die Horizontalachse H2 und die Vertikalachse V2 verlaufen und sich dort schneiden, ist das erste Tragelement 20 gelenkig mit dem Gehäuse bzw. an der Platte 80 gelenkig gelagert. Der Fix-Lagerpunkt 20b ist somit in Bezug auf das Gehäuse nicht verschieblich, Verschwenkbewegungen des Tragelementes 20 um diesen Fix-Lagerpunkt 20b sind aber möglich.

Außerdem ist das zweite Tragelement 30 mit drei Lagerpunkten 30a, 30b, 30c in dem Gehäuse 10 gelagert, wobei ein erster und ein zweiter Lagerpunkt 30a, 30b die Horizontalachse H3 und der zweite und ein dritter Lagerpunkt 30b, 30c die Vertikalachse V3 bilden.

Der zweite Lagerpunkt 30b des zweiten Tragelementes 30 ist ein Fix-Lagerpunkt ist, welcher in Bezug auf das Gehäuse 10 fix ist. Der Fix-Lagerpunkt 30b ist ebenfalls auf Platte 80 angeordnet.

Über den Fix-Lagerpunkt 30b, durch welchen die Horizontalachse H3 und die Vertikalachse V3 verlaufen und sich dort schneiden, ist das zweite Tragelement 30 gelenkig mit dem Gehäuse bzw. an der Platte 80 gelenkig gelagert. Der Fix-Lagerpunkt 30b ist somit in Bezug auf das Gehäuse nicht verschieblich, Verschwenkbewegungen des zweiten Tragelementes 30 um diesen Fix-Lagerpunkt 30b sind aber möglich.

Zum gemeinsamen Verschwenken der Tragelemente 20, 30 um deren Horizontalachsen H2, H3 ist eine Horizontalachsen-Verschwenkeinrichtung 41 vorgesehen ist. Die Verstelleinrichtung 41 besteht in bekannter Weise beispielsweise aus einem manuell zu betätigenden Drehelement 41a, dessen Verdrehung in eine Linearbewegung eines Stellelementes 41b umgesetzt wird. Dieses Stellelement greift an dem ersten Tragelement 20 an und führt zu einer Verschwenkbewegung dieses Tragelementes um die Horizontalachse H2. In dem gezeigten Beispiel ist im Stellweg des Stellelementes 41b zusätzlich noch ein Antrieb 90, vorzugsweise ein elektrischer Antrieb zur Leuchtweitenregulierung angeordnet, welcher bei der Einstellung der Grundeinstellung mit verschoben wird und anschließend im Betrieb des Scheinwerfers die Leuchtweite der erzeugten Lichtverteilung(en) durch Schwenken um die horizontalen Achse, vorzugsweise dynamisch, reguliert.

Weiters sind die zwei Tragelemente 20, 30 mit einer Horizontalachsen-Koppelvorrichtung 60 derart gekoppelt sind, dass bei einem Verschwenken des ersten Tragelementes 20 mit der Horizontalachsen-Verschwenkeinrichtung 41 auch das zweite Tragelement 30 um seine Horizontalachse H3 verschwenkt wird.

Dabei ist vorgesehen, dass die Horizontalachsen-Koppelvorrichtung 60 mit dem ersten Tragelement 20 über dessen dritten Lagerpunkt 20c gelenkig und mit dem zweiten Tragelement 30 über dessen dritten Lagerpunkt 30c gelenkig verbunden ist. Außerdem ist die Horizontalachsen-Verstelleinrichtung 41 mit der Horizontalachsen-Koppelvorrichtung 60 gelenkig in einem Gelenkspunkt 41c verbunden, sodass bei einem Verstellen der Horizontalachsen-Koppelvorrichtung 60 mittels der Horizontalachsen-Verstelleinrichtung 41 die beiden Tragelemente 20, 30 um ihre Horizontalachsen H2, H3 verschwenkt werden.

Zum Verschwenken der beiden Tragelemente 20, 30 um deren Vertikalachsen V2, V3 ist eine Vertikalachsen-Verschwenkeinrichtung 51 vorgesehen. Üblicherweise handelt es sich dabei um eine Verschwenkeinrichtung 51, welche einen ähnlichen Aufbau aufweist wie die Verschwenkeinrichtung 41. Ein zusätzlicher Antrieb wie bei der Verschwenkeinrichtung 41 ist in dem gezeigten Beispiel für die Verschwenkeinrichtung 51 nicht unmittelbar vorgesehen, kann aber beispielsweise zur Realisierung einer, vorzugsweise dynamischen, Kurvenlichtfunktion ohne weiteres analog zu der Verschwenkeinrichtung 41 vorgesehen werden.

Dabei ist vorgesehen, dass die Vertikalachsen-Koppelvorrichtung 70 an dem oder in Bezug auf das Gehäuse, z.B. an der Platte 80 um eine Koppelvorrichtungs-Vertikalachse V70 verschwenkbar gelagert ist. Die Vertikalachse V70 wird dabei beispielsweise von einem Zylinder 81, welcher von der Platte 80 absteht, gebildet, die Vertikalachsen-Koppelvorrichtung 70 weist eine entsprechende Öffnung auf, mit welcher sie an dem Zylinder 81 drehbar gelagert ist.

Die Vertikalachsen-Verstelleinrichtung 51 greift an der Vertikalachsen-Koppelvorrichtung 70 an einem Gelenkspunkt 51a gelenkig an, sodass die Vertikalachsen-Koppelvorrichtung 70 mit der Vertikalachsen-Verstelleinrichtung 51 um die Koppelvorrichtungs-Vertikalachse V70 verschwenkbar ist.

Weiters ist die Vertikalachsen-Koppelvorrichtung 70 mit dem ersten Tragelement 20 über dessen ersten Lagerpunkt 20a und mit dem zweiten Tragelement 30 über dessen ersten Lagerpunkt 30a gelenkig verbunden.

Bei einem Verschwenken der Vertikalachsen-Koppelvorrichtung 70 um seine Achse V70 werden entsprechend die beiden Tragelemente 20, 30 gleichzeitig um deren vertikale Achsen V2, V3 verschwenkt.

Bei der konkreten Ausführungsform ist vorgesehen, dass je ein Tragelement 20, 30 auf einer Seite einer in Lichtaustrittsrichtung verlaufenden Vertikalebene durch die Koppelvorrichtungs-Vertikalachse V70 angeordnet ist.

Durch diese Anordnung der Vertikalachse zwischen den Tragelementen, vorzugsweise in der geometrischen Mitte zwischen den Tragelementen, wirkt im Falle einer Belastung, insbesondere einer Schockbelastung entgegen der Fahrtrichtung nur die resultierende Differenzkraft auf die Vertikalachsen-Verstelleinrichtung. Die deutlich größere, aus der Belastung auftretende Gesamtkraft hingegen wird in den Drehpunkt eingeleitet.

Weiters ist bei der gezeigten Ausführungsform noch vorgesehen, dass die ersten Lagerpunkte 20a, 30a der Tragelemente 20, 30 von der Vertikalebene, welche durch die Koppelvorrichtungs-Vertikalachse V70 verläuft, abgewandt, und die Fix-Lagerpunkte 20b, 30b der Vertikalebene zugewandt sind.

Bei einer konstruktiv einfachen, stabilen und kostengünstigen Ausführungsform ist vorgesehen, dass die Horizontalachsen-Koppelvorrichtung 60 und/oder die Vertikalachsen-Koppelvorrichtung 70 als einstückiges Koppelelement 60, 70 ausgebildet sind. Vorzugsweise weisen aber eine oder vorzugsweise beide Koppelvorrichtungen 60, 70 einen vom Prinzip her ähnlichen/identischen Aufbau auf wie am Beispiel der ersten Variante in Figur 1a gezeigt, sodass die beiden Tragrahmen vor der Grundeinstellung vorerst zueinander noch ausgerichtet werden können.

Die Erfindung erlaubt ein synchrones Verschwenken von zwei oder auch mehr Tragelementen (bzw. Lichtmodulen etc.) um jeweils zwei Achsen mit lediglich einer der Anzahl der Achsenpaare entsprechenden Anzahl an Verstelleinrichtungen. Das Ausmaß des Verschenkens, d.h. der Winkel, um den die beiden Tragrahmen gleichzeitig um ihre Horizontalachsen bzw. Vertikalachsen verschwenkt werden, ist dabei vorzugsweise für beide Tragrahmen jeweils gleich groß, d.h. bei einem Verschwenken des Tragrahmens 1 um einen Winkel von X° um seine Horizontalachse/Vertikalachse wird auch der zweite Tragrahmen um einen Winkel von X° um seine Horizontalachse/Vertikalachse verschwenkt.

Dabei ist ein solches Verstellen insbesondere auch dann möglich, wenn der Scheinwerfer über eine große Pfeilung verfügt. Beispielsweise weist der Scheinwerder gemäß den gezeigten zweiten Varianten eine Pfeilung von ca. 45° auf.

Die Erfindung eignet sich somit insbesondere für Scheinwerfer mit einer Pfeilung bis zu 45° besonders gut geeignet.

## Patentansprüche

1. Fahrzeugscheinwerfer (1) mit einem Gehäuse (10) sowie mit zumindest zwei optisch relevanten Baueinheiten (2, 3), beispielsweise zumindest zwei Lichtmodulen und/oder Lichtmodul-Einheiten (2, 3), wobei jede der zumindest zwei optisch relevanten Baueinheiten (2, 3) um eine Horizontalachse (H2, H3) und um eine Vertikalachse (V2, V3) verschwenkbar sind, wobei
zumindest zwei der optisch relevanten Baueinheit (2, 3) jeweils in einem Tragelement (20, 30) angeordnet sind, welche Tragelemente (20, 30) in dem Gehäuse (10) um jeweils eine Horizontalachse (H2, H3) und um jeweils eine Vertikalachse (V2, V3) verschwenkbar gelagert sind,
und wobei zum Verschwenken der Tragelemente (20, 30) um deren Horizontalachsen (H2, H3) eine Horizontalachsen-Verschwenkeinrichtung (41) vorgesehen ist, welche Horizontalachsen-Verschwenkeinrichtung (41) ein Tragelement (20) um dessen Horizontalachse (H2) verschwenkt,
und wobei die zumindest zwei Tragelemente (20, 30) mit einer Horizontalachsen-Koppelvorrichtung (60) derart gekoppelt sind, dass bei einem Verschwenken des einen Tragelementes (20) mit der Horizontalachsen-Verschwenkeinrichtung (41) auch das zumindest eine weitere Tragelement (30) um seine Horizontalachse (H3) verschwenkt wird,
und wobei zum Verschwenken der beiden Tragelemente (20, 30) um deren zumindest eine Vertikalachse (V2, V3) eine Vertikalachsen-Verschwenkeinrichtung (51) vorgesehen ist, welche Vertikalachsen-Verschwenkeinrichtung (51) ein Tragelement (20) um dessen Vertikalachse (V2) verschwenkt,
und wobei die zumindest zwei Tragelemente (20, 30) mit einer Vertikalachsen-Koppelvorrichtung (70) derart gekoppelt sind, dass bei einem Verschwenken des einen Tragelementes (20) mit der Vertikalachsen-Verschwenkeinrichtung (51) auch das zumindest eine weitere Tragelement (30) um seine Vertikalachse (V3) verschwenkt wird, wobei ein erstes Tragelement (20) mit drei Lagerpunkten (20a, 20b, 20c) in dem Gehäuse (10) gelagert ist, wobei ein erster und ein zweiter Lagerpunkt (20a, 20b) die Horizontalachse (H2) und der zweite und ein dritter Lagerpunkt (20b, 20c) die Vertikalachse (V2) bilden, wobei der zweite Lagerpunkt (20b) des ersten Tragelementes (20) ein Fix-Lagerpunkt ist, welcher in Bezug auf das Gehäuse (10) fix ist, und wobei ein zweites Tragelement (30) mit drei Lagerpunkten (30a, 30b, 30c) in dem Gehäuse (10) gelagert ist, wobei ein erster und ein zweiter Lagerpunkt (30a, 30b) die Horizontalachse (H3) und der zweite und ein dritter Lagerpunkt (30b, 30c) die Vertikalachse (V3) bilden, wobei der zweite Lagerpunkt (30b) des zweiten Tragelementes (30) ein Fix-Lagerpunkt ist, welcher in Bezug auf das Gehäuse (10) fix ist,
**dadurch gekennzeichnet, dass**
die Horizontalachsen (H2, H3) nicht zusammenfallen, insbesondere in Lichtaustrittsrichtung zueinander versetzt sind, und
die beiden Fix-Lagerpunkte (20b, 30b) der Tragrahmen (20, 30) in Lichtaustrittsrichtung hintereinander angeordnet sind, wobei vorzugsweise der erste Tragrahmen (20) hinter dem zweiten Tragrahmen (30) angeordnet ist.

2. Fahrzeugscheinwerfer nach Anspruch 1, **dadurch gekennzeichnet, dass** die Horizontalachsen-Verschwenkeinrichtung (41), vorzugsweise direkt, an dem ersten Tragelement (20) angreift, wobei vorzugsweise die Horizontalachsen-Verschwenkeinrichtung (41) in dem dritten Lagerpunkt (20c), vorzugsweise gelenkig, mit dem ersten Tragelement (20) verbunden ist.

3. Fahrzeugscheinwerfer nach Anspruch 1 oder 2, **dadurch gekennzeichnet, dass** die Vertikalachsen-Verschwenkeinrichtung (51), vorzugsweise direkt, an dem ersten Tragelement (20) angreift, wobei vorzugsweise die Vertikalachsen-Verschwenkeinrichtung (51) in dem ersten Lagerpunkt (20a), vorzugsweise gelenkig, mit dem ersten Tragelement (20) verbunden ist.

4. Fahrzeugscheinwerfer nach einem der Ansprüche 1 bis 3, **dadurch gekennzeichnet, dass** die Horizontalachsen-Koppelvorrichtung (60) im Bereich des dritten Lagerpunktes (20c) mit dem ersten Tragelement (20) gelenkig verbunden ist, wobei vorzugsweise die Horizontalachsen-Koppelvorrichtung (60) in dem dritten Lagerpunkt (30c) des zweiten Tragelementes (30) mit dem zweiten Tragelement (30) gelenkig verbunden ist.

5. Fahrzeugscheinwerfer nach einem der Ansprüche 1 bis 4, **dadurch gekennzeichnet, dass** die Vertikalachsen-Koppelvorrichtung (70) die beiden Tragrahmen (20, 30) direkt miteinander verbindet, wobei vorzugsweise die Vertikalachsen-Koppelvorrichtung (70) in dem ersten Lagerpunkt (30a) des zweiten Tragelementes (30) mit dem zweiten Tragelement (30) gelenkig verbunden ist.

6. Fahrzeugscheinwerfer nach einem der Ansprüche 1 bis 5, **dadurch gekennzeichnet, dass** die Horizontalachsen-Koppelvorrichtung (60) die beiden Tragrahmen (20, 30) direkt miteinander verbindet.

7. Fahrzeugscheinwerfer nach einem der Ansprüche 1 bis 6, **dadurch gekennzeichnet, dass** die Vertikalachsen-Koppelvorrichtung (70) mit dem ersten Tragelement (20) in einem Gelenkspunkt (70a), welcher auf der Horizontalachse (H2) zwischen dem ersten und dem zweiten Lagerpunkt (20a, 20b) des ersten Tragelementes (20a) liegt, vorzugsweise gelenkig, verbunden ist, wobei vorzugsweise der Gelenkspunkt (70a) in der Mitte zwischen dem ersten und dem zweiten Lagerpunkt (20a, 20b) an dem ersten Tragrahmen (20) liegt.

8. Fahrzeugscheinwerfer nach einem der Ansprüche 1 bis 7, **dadurch gekennzeichnet, dass** die Vertikalachsen-Koppelvorrichtung (70) an dem oder in Bezug auf das Gehäuse (10) um eine Koppelvorrichtungs-Vertikalachse (V70) verschwenkbar gelagert ist, wobei die Vertikalachsen-Koppelvorrichtung (70) mittels der Vertikalachsen-Verstelleinrichtung (51), welche an der Vertikarachsen-Koppelvörrichtung (70), vorzugsweise gelenkig, angreift, um die Koppelvorrichtungs-Vertikalachse (V70) verschwenkbar ist, und wobei die Vertikalachsen-Koppelvorrichtung (70) mit dem ersten Tragelement (20) über dessen ersten Lagerpunkt (20a) und mit dem zweiten Tragelement (30) über dessen ersten Lagerpunkt (30a), vorzugsweise gelenkig, verbunden ist.

9. Fahrzeugscheinwerfer nach Anspruch 8, **dadurch gekennzeichnet, dass** je ein Tragelement (20, 30) jeweils auf einer Seite einer in Lichtaustrittsrichtung und durch die Koppelvorrichtungs-Vertikalachse (V70) verlaufenden Vertikalebene angeordnet ist, wobei vorzugsweise die ersten Lagerpunkte (20a, 30a) der Tragelemente (20, 30) von der Vertikalebene abgewandt, und die Fix-Lagerpunkte (20b, 30b) der Vertikalebene zugewandt sind.

10. Fahrzeugscheinwerfer nach Anspruch 8 oder 9, **dadurch gekennzeichnet, dass** die Horizontalachsen-Koppelvorrichtung (60) mit dem ersten Tragelement (20) über dessen dritten Lagerpunkt (20c), vorzugsweise gelenkig, und mit dem zweiten Tragelement (30) über dessen dritten Lagerpunkt (30c), vorzugsweise gelenkig, verbunden ist, und wobei die Horizontalachsen-Verstelleinrichtung (41) mit der Horizontalachsen-Koppelvorrichtung (60), vorzugsweise gelenkig, verbunden ist, sodass bei einem Verstellen der Horizontalachsen-Koppelvorrichtung (60) mittels der Horizontalachsen-Verstelleinrichtung (41) die zumindest zwei Tragelemente (20, 30) um ihre Horizontalachsen (H2, H3) verschwenkt werden.

11. Fahrzeugscheinwerfer nach einem der Ansprüche 1 bis 10, **dadurch gekennzeichnet, dass** die Horizontalachsen-Koppelvorrichtung (60) und/oder die Vertikalachsen-Koppelvorrichtung (70) als, vorzugsweise einstückiges, Koppelelement (60, 70) ausgebildet sind.

12. Fahrzeugscheinwerfer nach einem der Ansprüche 1 bis 10, **dadurch gekennzeichnet, dass** die Horizontalachsen-Koppelvorrichtung (60) und/oder die Vertikalachsen-Koppelvorrichtung (70) längenveränderlich ausgebildet sind, wobei vorzugsweise die eingestellte Länge der Koppelvorrichtung (60, 70) fixierbar ist bzw. fix bleibt.

13. Fahrzeugscheinwerfer nach Anspruch 12, **dadurch gekennzeichnet, dass** die Horizontalachsen-Koppelvorrichtung (60) und/oder die Vertikalachsen-Koppelvorrichtung (70) jeweils aus einem mit einem Außengewinde versehenen Schraubenelement (61) und einem Koppelstangen-Element (62) mit einem Innengewinde, in welchem das Schraubenelement (61) verdrehbar gelagert ist, gebildet ist, wobei vorzugsweise das Schraubenelement (61) der zumindest einen Koppelvorrichtung (60, 70) gelenkig in einem Lagerpunkt (30c) mit dem zweiten Tragelement (30) verbunden und das Koppelstangen-Element (62) gelenkig in einem Lagerpunkt (20c) an dem ersten Tragrahmen 20 gelagert ist.

## Claims

1. Vehicle headlamp (1) comprising a housing (10) and at least two optically relevant construction units (2, 3), for example at least two light modules and/or light module units (2, 3), each of the at least two optically relevant construction units (2, 3) being pivotable about a horizontal axis (H2, H3) and about a vertical axis (V2, V3), wherein
at least two of the optically relevant construction units (2, 3) are each arranged in a support element (20, 30), which support elements (20, 30) are mounted pivotable in the housing (10) about a respective horizontal axis (H2, H3) and about a respective vertical axis (V2, V3),
and wherein for pivoting the support elements (20, 30) about their horizontal axes (H2, H3), a horizontal-axis pivoting device (41) is provided, which horizontal-axis pivoting device (41) rotates a support element (20) about its horizontal axis (H2),
and wherein the at least two support elements (20, 30) are coupled to a horizontal-axis coupling device (60) in a way that, when the one support element (20) is rotated by the horizontal-axis pivoting device (41), the at least one further support element (30) is also rotated about its horizontal axis (H3),
and wherein for pivoting the two support elements (20, 30) about their at least one vertical axis (V2, V3) a vertical-axis pivoting device (51) is provided, which vertical-axis pivoting device (51) rotates a support element (20) about its vertical axis (V2),
and wherein the at least two support elements (20, 30) are coupled to a vertical-axis coupling device (70) in a way that, when one support element (20) is rotated by the vertical-axis pivoting device (51), the at least one further support element (30) is also rotated about its vertical axis (V3), wherein
a first support element (20) is mounted in the housing (10) with three bearing points (20a, 20b, 20c), a first and a second bearing point (20a, 20b) forming the horizontal axis (H2) and the second and a third bearing point (20b, 20c) forming the vertical axis (V2), the second bearing point (20b) of the first support element (20) being a fixed bearing point which is fixed with respect to the housing (10), and wherein
a second support element (30) is supported in the housing (10) with three bearing points (30a, 30b, 30c), a first and a second bearing point (30a, 30b) forming the horizontal axis (H3) and the second and a third bearing point (30b, 30c) forming the vertical axis (V3), the second bearing point (30b) of the second support element (30) being a fixed bearing point which is fixed with respect to the housing (10)
**characterised in that**
the horizontal axes (H2, H3) are not coinciding, in particular are offset relative to one another in the light exit direction, and
the two fixed bearing points (20b, 30b) of the support frames (20, 30) are arranged one behind the other in the light exit direction, preferably the first support frame (20) being arranged behind the second support frame (30).

2. Vehicle headlamp according to claim 1, **characterised in that** the horizontal-axis pivoting device (41) engages the first support element (20), preferably directly, wherein preferably the horizontal-axis pivoting device (41) is connected, preferably in an articulated manner, to the first support element (20) at the third bearing point (20c).

3. Vehicle headlamp according to claim 1 or 2, **characterised in that** the vertical-axis pivoting device (51) engages the first support element (20), preferably directly, wherein preferably the vertical-axis pivoting device (51) is connected, preferably in an articulated manner, to the first support element (20) at the first bearing point (20a).

4. Vehicle headlamp according to any one of claims 1 to 3, **characterised in that** the horizontal-axis coupling device (60) is connected in an articulated manner to the first support element (20) in the region of the third bearing point (20c), wherein preferably the horizontal-axis coupling device (60) is connected in an articulated manner to the second support element (30) in the third bearing point (30c) of the second support element (30).

5. Vehicle headlamp according to any one of claims 1 to 4, **characterised in that** the vertical-axis coupling device (70) connects the two supporting frames (20, 30) directly to each other, wherein preferably the vertical-axis coupling device (70) is connected in an articulated manner to the second support element (30) at the first bearing point (30a) of the second support element (30).

6. Vehicle headlamp according to any one of claims 1 to 5, **characterised in that** the horizontal-axis coupling device (60) connects the two support frames (20, 30) directly to each other.

7. Vehicle headlamp according to any one of claims 1 to 6, **characterised in that** the vertical-axis coupling device (70) is connected, preferably in an articulated manner, to the first support element (20) in an articulation point (70a) located on the horizontal axis (H2) between the first and second bearing points (20a, 20b) of the first support element (20a), wherein preferably the articulation point (70a) is located in the centre between the first and the second bearing point (20a, 20b) on the first support element (20).

8. Vehicle headlamp according to any one of claims 1 to 7, **characterised in that** the vertical-axis coupling device (70) is mounted on or with respect to the housing (10) so as to be pivotable about a coupling device vertical axis (V70), wherein the vertical-axis coupling device (70) is pivotable about said coupling device vertical axis (V70) by means of the vertical axis adjusting device (51), which engages the vertical-axis coupling device (70) preferably in an articulated manner, and wherein the vertical-axis coupling device (70) is connected to the first support element (20) via its first bearing point (20a) and to the second support element (30) via its first bearing point (30a), preferably in an articulated manner.

9. Vehicle headlamp according to claim 8, **characterised in that** a respective support element (20, 30) is arranged on either side of a vertical plane extending along the light exit direction and through the coupling device vertical axis (V70), wherein preferably the first bearing points (20a, 30a) of the support elements (20, 30) are facing away from the vertical plane and the fixed bearing points (20b, 30b) are facing the vertical plane.

10. Vehicle headlamp according to claim 8 or 9, **characterised in that** the horizontal-axis coupling device (60) is connected to the first support element (20) via its third bearing point (20c), preferably in an articulated manner, and to the second support element (30) via its third bearing point (30c), preferably in an articulated manner, and wherein the horizontal axis adjusting device (41) is connected to the horizontal-axis coupling device (60), preferably in an articulated manner, so that during adjusting the horizontal-axis coupling device (60) by means of the horizontal axis adjusting device (41), the at least two support elements (20, 30) are rotated about their horizontal axes (H2, H3).

11. Vehicle headlamp according to one of claims 1 to 10, **characterised in that** the horizontal-axis coupling device (60) and/or the vertical-axis coupling device (70) are realised as, preferably integral, coupling element (60, 70).

12. Vehicle headlamp according to one of claims 1 to 10, **characterised in that** the horizontal-axis coupling device (60) and/or the vertical-axis coupling device (70) are realized variable in length, wherein preferably the adjusted length of the coupling device (60, 70) is fixable or remains fixed.

13. Vehicle headlamp according to claim 12, **characterised in that** the horizontal-axis coupling device (60) and/or the vertical-axis coupling device (70) respectively are realised by a screw element (61) having an external thread and a coupling rod element (62) having an internal thread, in which the screw element (61) is mounted so as to be rotatable, wherein the screw element (61) of the at least one coupling device (60, 70) is preferably connected in an articulated manner at a bearing point (30c) to the second support element (30) and the coupling rod element (62) is mounted in an articulated manner at a bearing point (20c) on the first supporting frame 20.

## Revendications

1. Phare de véhicule (1) comportant un boîtier (10) et comportant au moins deux unités constructives (2, 3) optiquement actives, par exemple au moins deux modules d'éclairage et/ ou unités de modules d'éclairage (2, 3), chacune desdites au moins deux unités constructives (2, 3) optiquement actives pouvant pivoter autour d'un axe horizontal (H2, H3) et autour d'un axe vertical (V2, V3),
au moins deux desdites unités constructives (2, 3) optiquement actives sont disposées respectivement dans un élément de support (20, 30), lesquels éléments de support (20, 30) sont montés dans le boîtier (10) de manière à pouvoir pivoter respectivement autour d'un axe horizontal (H2, H3) et d'un axe vertical (V2, V3),
et, pour faire pivoter les éléments de support (20, 30) autour de leurs axes horizontaux (H2, H3), un dispositif de pivotement à axe horizontal (41) étant prévu, lequel dispositif de pivotement à axe horizontal (41) fait pivoter un élément de support (20) autour de son axe horizontal (H2),
et lesdits au moins deux éléments de support (20, 30) étant couplés à un dispositif de couplage à axe horizontal (60) de telle manière que, lorsque l'un des éléments de support (20) est pivoté par le dispositif de pivotement à axe horizontal (41), l'autre élément de support (30) au moins est également pivoté autour de son axe horizontal (H3),
et, pour faire pivoter les deux éléments de support (20, 30) autour de leur au moins un axe vertical (V2, V3), un dispositif de pivotement à axe vertical (51) étant prévu, lequel dispositif de pivotement à axe vertical (51) fait pivoter un élément de support (20) autour de son axe vertical (V2),
et les au moins deux éléments de support (20, 30) étant couplés à un dispositif de couplage à axe vertical (70) de telle manière que lorsque l'un des élément de support (20) est pivoté par le dispositif de pivotement à axe vertical (51), l'au moins un autre élément de support (30) est également pivoté autour de son axe vertical (V3), alors que
un premier élément de support (20) est monté dans le boîtier (10) avec trois points d'appui (20a, 20b, 20c), un premier et un deuxième point d'appui (20a, 20b) formant l'axe horizontal (H2) et le deuxième et un troisième point d'appui (20b, 20c) formant l'axe vertical (V2), le deuxième point d'appui (20b) du premier élément de support (20) étant un point d'appui fixe qui est fixe par rapport au boîtier (10), et
un deuxième élément de support (30) étant supporté dans le boîtier (10) avec trois points d'appui (30a, 30b, 30c), un premier et un deuxième point d'appui (30a, 30b) formant l'axe horizontal (H3) et le deuxième et un troisième point d'appui (30b, 30c) formant l'axe vertical (V3), le deuxième point d'appui (30b) du deuxième élément de support (30) étant un point d'appui fixe qui est fixe par rapport au boîtier (10)
**caractérisé en ce que**
les axes horizontaux (H2, H3) ne coïncident pas, en particulier sont décalés l'un par rapport à l'autre dans la direction de la sortie de la lumière, et
les deux points d'appui fixes (20b, 30b) des cadres de support (20, 30) sont disposés l'un derrière l'autre dans la direction de la sortie de la lumière, le premier cadre de support (20) étant de préférence disposé derrière le second cadre de support (30).

2. Phare de véhicule selon la revendication 1, **caractérisé en ce que** le dispositif de pivotement à axe horizontal (41) s'engage, de préférence directement, sur le premier élément de support (20), de préférence le dispositif de pivotement à axe horizontal (41) étant relié, de préférence de manière articulée, au premier élément de support (20) au niveau du troisième point d'appui (20c).

3. Phare de véhicule selon la revendication 1 ou 2, **caractérisé en ce que** le dispositif de pivotement à axe vertical (51) s'engage, de préférence directement, sur le premier élément de support (20), de préférence le dispositif de pivotement à axe vertical (51) étant relié, de préférence de manière articulée, au premier élément de support (20) au niveau du premier point d'appui (20a).

4. Phare de véhicule selon l'une des revendications 1 à 3, **caractérisé en ce que** le dispositif d'accouplement à axe horizontal (60) est relié de manière pivotante au premier élément de support (20) dans la région du troisième point d'appui (20c), de préférence le dispositif d'accouplement à axe horizontal (60) étant relié de manière pivotante au deuxième élément de support (30) dans le troisième point d'appui (30c) du deuxième élément de support (30).

5. Phare de véhicule selon l'une des revendications 1 à 4, **caractérisé en ce que** le dispositif d'accouplement à axe vertical (70) relie directement les deux cadres de support (20, 30) l'un à l'autre, de préférence le dispositif d'accouplement à axe vertical (70) étant relié de manière pivotante au deuxième élément de support (30) au niveau du premier point d'appui (30a) du deuxième élément de support (30).

6. Phare de véhicule selon l'une quelconque des revendications 1 à 5, **caractérisé en ce que** le dispositif d'accouplement à axe horizontal (60) relie directement les deux cadres de support (20, 30).

7. Phare de véhicule selon l'une quelconque des revendications 1 à 6, **caractérisé en ce que** le dispositif d'accouplement à axe vertical (70) est relié au premier élément de support (20) en un point d'articulation (70a) situé sur l'axe horizontal (H2) entre le premier et le deuxième point d'appui (20a), 20b) du premier élément de support (20a), de préférence de manière articulée, le point d'articulation (70a) étant de préférence situé au centre entre les premier et deuxième points d'appui (20a, 20b) sur le premier élément de support (20).

8. Phare de véhicule selon l'une des revendications 1 à 7, **caractérisé en ce que** le dispositif d'accouplement à axe vertical (70) est monté pivotable sur ou par rapport au boîtier (10) autour d'un axe vertical de dispositif d'accouplement (V70), le dispositif d'accouplement à axe vertical (70) étant monté pivotable, au moyen du dispositif de réglage d'axe vertical (51), qui s'engage sur le dispositif d'accouplement à axe vertical (70), de préférence de manière articulée, autour de l'axe vertical (V70) du dispositif d'accouplement, et le dispositif d'accouplement à axe vertical (70) étant relié au premier élément de support (20) par son premier point d'appui (20a) et au deuxième élément de support (30) par son premier point d'appui (30a), de préférence de manière articulée.

9. Phare de véhicule selon la revendication 8, **caractérisé en ce que**, un élément de support (20, 30) respectif est disposé à chaque côté d'un plan vertical s'étendant dans la direction de sortie de la lumière et passant par l'axe vertical (V70) du dispositif d'accouplement,
de préférence les premiers points d'appui (20a, 30a) des éléments de support (20, 30) tournés à l'opposé du plan vertical et les points d'appui fixes (20b, 30b) tournés vers le plan vertical.

10. Phare de véhicule selon la revendication 8 ou 9, **caractérisé en ce que** le dispositif d'accouplement à axe horizontal (60) est relié au premier élément de support (20) par son troisième point d'appui (20c), de préférence articulé, et au deuxième élément de support (30) par son troisième point d'appui (30c), de préférence articulé, et dans lequel le dispositif de réglage de l'axe horizontal (41) est relié au dispositif d'accouplement à axe horizontal (60), de préférence de manière articulée, de sorte que lorsque le dispositif d'accouplement à axe horizontal (60) est réglé au moyen du dispositif de réglage de l'axe horizontal (41), les au moins deux éléments de support (20, 30) sont pivotés autour de leurs axes horizontaux (H2, H3).

11. Phare de véhicule selon l'une des revendications 1 à 10, **caractérisé en ce que** le dispositif d'accouplement à axe horizontal (60) et/ou le dispositif d'accouplement à axe vertical (70) sont conçus comme élément d'accouplement (60, 70), de préférence d'une seule pièce.

12. Phare de véhicule selon l'une des revendications 1 à 10, **caractérisé en ce que** le dispositif d'accouplement à axe horizontal (60) et/ou le dispositif d'accouplement à axe vertical (70) sont conçus pour être de longueur variable, de préférence la longueur réglée du dispositif d'accouplement (60, 70) pouvant être fixée ou restant fixée.

13. Phare de véhicule selon la revendication 12, **caractérisé en ce que** le dispositif d'accouplement à axe horizontal (60) et/ou le dispositif d'accouplement à axe vertical (70) comportent chacun un élément de vis (61) muni d'un filetage extérieur et un élément de tige d'accouplement (62) muni d'un filetage intérieur, dans lequel l'élément de vis (61) est monté de manière tournable, de préférence l'élément de vis (61) du au moins un dispositif d'accouplement (60, 70) étant relié de manière articulée à un point d'appui (30c) au deuxième élément de support (30) et l'élément de tige d'accouplement (62) étant monté de manière articulée à un point d'appui (20c) sur le premier cadre de support (20).
